# EUROPEAN PATENT SPECIFICATION

(11) **EP 3 828 220 B1**
(45) Date of publication and mention of the grant of the patent: **19.02.2025**
(21) Application number: 20850968.7
(22) Date of filing: 07.08.2020
(51) Int. Cl.: C08G 59/32, C08G 59/62, C08K 3/36, C08K 5/544, C08K 5/548, H01R 12/72, C09D 163/00, H01R 13/52, C08G 59/68, C08G 59/50

(54) **ENCAPSULATING RESIN COMPOSITION AND ELECTRONIC COMPONENT**
EINKAPSELUNGSHARZZUSAMMENSETZUNG UND ELEKTRONISCHE KOMPONENTE
COMPOSITION DE RESINE D'ENCAPSULATION ET COMPOSANT ELECTRONIQUE

(30) Priority: 08.08.2019 JP 2019146043
(43) Date of publication of application: 02.06.2021
(73) Proprietor: Sumitomo Bakelite Co.Ltd., Shinagawa-ku Tokyo 140-0002 (JP)
(72) Inventor: KITADA, Tetsuya, Tokyo 140-0002 (JP)
(74) Representative: Müller-Boré & Partner Patentanwälte PartG mbB
(86) International application number: PCT/JP2020/030344
(87) International publication number: WO 2021/025146

(56) References cited:
- EP-A1- 3 358 919
- EP-A1- 3 536 745
- WO-A1-2014/010559
- WO-A1-2014/065152
- WO-A1-2017/126307
- WO-A1-2019/039244
- JP-A- 2013 040 298
- JP-A- 2019 041 010
- JP-A- 2019 125 624
- JP-A- H10 168 286
- "Advances in new materials", 1992, article BIERNATH R.W. ET AL: "Cure kinetics of epoxy cresol novolac encapsulant for microelectronic packaging", pages: 103 - 159, XP002806862, DOI: 10.1007/978-1-4615-3456-3_10

## Description

### TECHNICAL FIELD

The present invention relates to an encapsulating resin composition and an electronic component.

### BACKGROUND ART

In order to respond to miniaturization and thinning of electronic components, it is known that a structure in which a connector is mounted to an electronic circuit board, and the connector is encapsulated with an encapsulating resin composition from above (for example, Patent Document 1).

### RELATED DOCUMENT

[Patent Document 1] WO2017/056728
[Patent Document 2] WO 2019/039244 A1 describes a resinsealed on-board electronic control device.
[Patent Document 3] WO 2014/065152 A1 describes an epoxy resin composition, a method for producing epoxy resin cured product, and a semiconductor device.
[Patent Document 4] WO 2014/010559 A1 describes epoxy resin, epoxy resin composition, method for curing same, and cured product thereof.
[Patent Document 5] EP 3 536 745 A1 describes an epoxy resin composition and structure.
[Non-Patent Document 1] R.W. Biernath et al., Advances in New Materials, 1992, pages 103-159, describes cure kinetics of epoxy cresol novolac encapsulant for microelectronics packaging.

### SUMMARY OF THE INVENTION

### TECHNICAL PROBLEM

However, the technique described in Patent Document 1 focuses on the fact that the connector portion and the board expand and contract so as to warp due to a thermal history of solder joining, devises a method of fixing the connector portion, and do not focus on properties of an encapsulating resin composition.

On the other hand, in a case where a thermoplastic resin is used as a resin material of the connector portion, the connector portion is heated to about 170°C to 180°C when encapsulating the connector portion with the resin, so that stress is likely to occur between the circuit board and the connector portion due to the difference in linear expansion coefficient from the circuit board, in a subsequent cooling step. In addition, since a thermosetting resin is used as the encapsulating resin, there is a problem that peeling is likely to occur at an interface between the connector portion formed by using the thermoplastic resin and the circuit board. Therefore, it has been required that encapsulating can be performed at a lower temperature.

On the other hand, in order to obtain low-temperature curability of the encapsulating resin composition, it is known that a curing accelerator having strong activity is effectively used. However, in a case where a strongly active curing accelerator is used, there is a problem that a reaction is promoted during storage of the encapsulating resin composition, and there is a problem that a storage stability of the encapsulating resin composition is lowered.

Therefore, from the viewpoint of solving such a problem, the present inventors have focused on compatibility of the low-temperature curing properties and the storage stability of the encapsulating resin composition that is used for collectively encapsulating the connector portion formed by using the thermoplastic resin together with the circuit board, and have carried out studies. As a result, the present inventors found that by using a maximum heat release peak temperature in a differential scanning calorimetry (DSC) curve obtained by DSC as an index, a stable low-temperature curing can be achieved while obtaining the storage stability in a case where the connector portion formed by using the thermoplastic resin is collectively encapsulated together with the circuit board by the encapsulating resin composition.

### SOLUTION TO PROBLEM

According to the invention,
provided is an encapsulating resin composition that is used for collectively encapsulating a circuit board and at least a part of a connector portion that electrically connects the circuit board with an external device,
in which the encapsulating resin composition contains a curing accelerator, a thermosetting resin (A), and an inorganic filler, wherein the thermosetting resin (A) contains an epoxy resin, and wherein the content of the inorganic filler is equal to or more than 50% by mass and equal to or less than 95% by mass with respect to an entirety of the encapsulating resin composition,
the connector portion includes a terminal that electrically connects the circuit board with the external device, and a housing that is disposed on an outer periphery of the terminal and is encapsulated by the encapsulating resin composition,
the housing contains a thermoplastic resin, and
in a differential scanning calorimetry (DSC) curve of the encapsulating resin composition obtained in a case where a temperature is increased from 30°C to 200°C under conditions of a temperature increase rate of 10°C/min using a DSC meter, a maximum heat release peak temperature is equal to or higher than 100°C and equal to or lower than 163°C, and a half-value width of a maximum heat release peak is equal to or higher than 5°C and equal to or lower than 25°C.

In addition, according to the present invention,
provided is an electronic component in which a circuit board and a connector portion that electrically connects the circuit board with an external device are collectively encapsulated by the above-described encapsulating resin composition,
the connector portion includes a terminal that electrically connects the circuit board with the external device, and a housing that is disposed on an outer periphery of the terminal and is encapsulated by the encapsulating resin composition, and
the housing contains a thermoplastic resin.

### ADVANTAGEOUS EFFECTS OF INVENTION

According to the present invention, it is possible to provide the encapsulating resin composition capable of achieving the stable low-temperature curing while obtaining the storage stability.

### BRIEF DESCRIPTION OF THE DRAWINGS

Fig. 1 is a schematic cross-sectional view showing an electronic component 100 of the present embodiment.
Fig. 2 is a chart showing DSC curves of each encapsulating resin composition of Examples and Comparative Examples.

### DESCRIPTION OF EMBODIMENTS

Hereinafter, the embodiments of the present invention will be described in detail with reference to the drawings. The drawings are provided for illustration purposes only. The shapes and dimensional ratios of respective members in the drawings do not necessarily correspond to actual articles.

In the present specification, the expression of "a to b" in the description of the range of numerical values represents equal to or more than a and equal to or less than b, unless otherwise specified. For example, "1% to 5% by mass" means "equal to or more than 1% by mass and equal to or less than 5% by mass".

Unless otherwise specified, the "particle diameter" of various particles in the present specification can be obtained by acquiring data on the volume-based particle diameter distribution and processing the data with, for example, a laser diffraction/scattering type particle diameter distribution measuring device (for example, a particle diameter distribution analyzer LA-950 in wet mode manufactured by HORIBA, Ltd.).

For example, an "average particle diameter" can be obtained by the arithmetic average of the obtained particle diameter distribution data. In addition, a cumulative value of 10% (D10), a cumulative value of 50% (median diameter, D50), a cumulative value of 90% (D90), and the like can be obtained from the particle diameter distribution data.

### <Electronic Component>

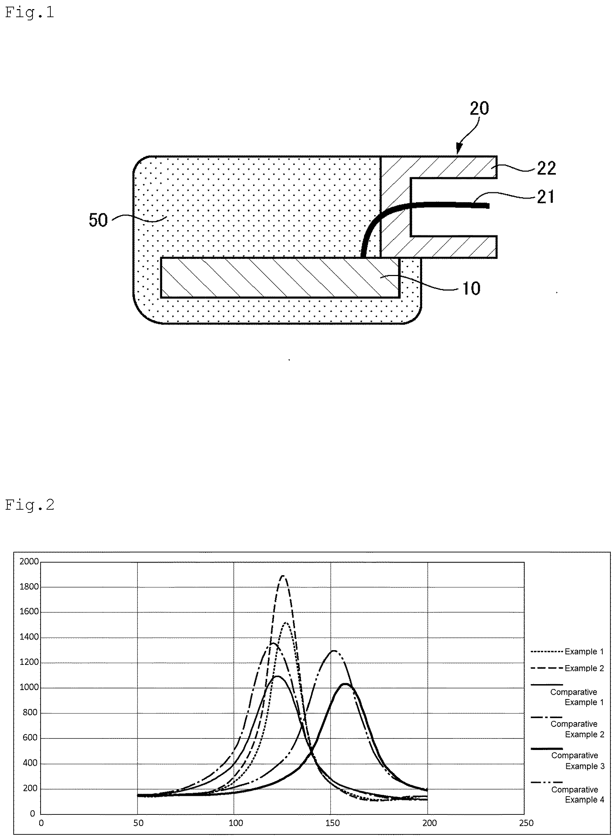

Fig. 1 is a schematic cross-sectional view showing an electronic component 100 of the present embodiment.

In the electronic component 100 of the present embodiment, a circuit board 10 and a connector portion 20 that electrically connects the circuit board 10 with an external device are collectively encapsulated by an encapsulating resin composition described later. More specifically, the circuit board 10 and the connector portion 20 are encapsulated by an encapsulating body 50 that is a cured product of the encapsulating resin composition. A conductor pattern or the like formed on an insulating base material is included in the circuit board 10. As the circuit board 10, a printed board or a ceramic board can be used. In addition, the circuit board 10 is, for example, a flat plate-shaped board.

The connector portion 20 includes a terminal 21 electrically connecting the circuit board 10 and the external device, and a housing 22 that is disposed on an outer periphery of the terminal 21 and that is encapsulated by the encapsulating resin composition. In addition, the housing 22 includes a thermoplastic resin. The connector portion is a so-called plastic connector or resin connector. Specifically, the connector portion 20 electrically connects the circuit board 10 and the external device to each other, is mounted on the circuit board 10, and is integrated by the encapsulating body 50. A part of the terminal 21 in the connector portion 20 is exposed to the outside, and the periphery thereof is surrounded by the housing 22.

The thermoplastic resin forming the housing 22 is not particularly limited, and examples thereof include polyamide resins such as nylon 6 and nylon 66, polyolefin resins such as polyester and polypropylene, polyphenylene sulfide resins, polyacetal resins, polyetheretherimide resins, polybutylene terephthalate resins, polyetherimide resins, polyamideimide resins, polyethersulfone resins, and one or two or more selected from engineering plastics.

Among these, engineering plastics are preferable. Examples of engineering plastics include one or two or more selected from the group consisting of polyphenylene sulfide (PPS), polybutylene terephthalate (PBT), syndiotactic polystyrene (SPS), and polyamide (PA).

Even in a case where the housing 22 contains the thermoplastic resin, the encapsulating resin composition of the present embodiment can realize encapsulating at a low-temperature, so that the good appearance and reliability of the electronic component are maintained.

### <Encapsulating Resin Composition>

The encapsulating resin composition of the present embodiment is used for the above-described electronic component 100, and satisfies the following conditions. Therefore, both storage stability and encapsulating at a low-temperature can be achieved, and the appearance and reliability of the electronic component are maintained. The encapsulating temperature can be lowered than the encapsulating temperature of 170°C to 180°C in the related art, and for example, the encapsulating is preferably performed at equal to or lower than 165°C, and is more preferably performed at lower than 140°C and lower than 5 MPa. From the viewpoint of curing the resin and appropriately performing the encapsulating, the encapsulating is preferably performed at equal to or higher than 100°C and equal to or higher than 1 MPa.

In addition, by satisfying the following conditions, the details of a mechanism in which both the storage stability and the encapsulating at a low-temperature can be achieved are not clear, but in general, in a case where the heat release peak of DSC is wide and the base of the peak extends to the low-temperature side, a curing reaction proceeds relatively quickly even in a state of a low-temperature storage, and the storage stability tends to deteriorate. Therefore, in the present invention, it is considered that while the reaction is suppressed from proceeding during the low-temperature storage by narrowing the heat release peak of the DSC curve, the narrow peak is in a relatively low-temperature region, so that a reaction rate of curing in the low-temperature region can be increased. In other words, it can be said that the smaller the half-value width, the higher the storage stability, the greater the half-value width, the lower the storage stability, and as the heat release peak appears at the lower-temperature side, the resin can be cured at the lower-temperature.

Conditions: in a differential scanning calorimetry (DSC) curve of the encapsulating resin composition obtained in a case where a temperature is increased from 30°C to 200°C under conditions of a temperature increase rate of 10°C/min using the DSC meter, a maximum heat release peak temperature is equal to or higher than 100°C and equal to or lower than 163°C, and a half-value width of a maximum heat release peak is equal to or higher than 5°C and equal to or lower than 25°C.

The upper limit value of a maximum heat release peak temperature is preferably equal to or lower than 160°C, and more preferably equal to or lower than 150°C. In addition, the upper limit value of the half-value width of the maximum heat release peak is preferably equal to or lower than 23°C, and more preferably equal to or lower than 20°C.

In addition, a heat release onset temperature in the DSC curve under the above conditions is preferably in a range of equal to or higher than 70°C and equal to or lower than 130°C, more preferably in a range of equal to or higher than 75°C and equal to or lower than 120°C, even more preferably in a range of equal to or higher than 80°C and equal to or lower than 115°C, and still even more preferably in a range of equal to or higher than 90°C and equal to or lower than 110°C.

By setting the heat release onset temperature to equal to or higher than the above lower limit value, the storage stability can be improved, while by setting the heat release onset temperature to equal to or lower than the above upper limit value, low-temperature curability can be obtained.

The maximum heat release peak temperature and the heat release onset temperature in the DSC curve under the above conditions can be realized by selecting a material or devising a manufacturing method. For example, a method of controlling a content of an inorganic filler (B) depending on a type of a thermosetting resin (A) described later, a method of selecting a type of a curing accelerator (D) and controlling a content thereof, or a method of controlling kneading conditions during the production of the encapsulating resin composition described later or performing no kneading may be employed. However, the encapsulating resin composition of the present embodiment is not limited to such materials and producing methods.

The glass transition temperature of the cured product of the encapsulating resin composition of the present embodiment is preferably equal to or higher than 140°C and equal to or lower than 250°C, and more preferably equal to or higher than 150°C and equal to or lower than 230°C. The cured product of the encapsulating resin composition means a product molded under conditions at 140°C for two minutes and post-cured at 140°C for four hours.

Hereinafter, each component of the encapsulating resin composition will be described.

### [Curing Accelerator (D)]

The curing accelerator (D) of the present embodiment has strong activity. Therefore, while low-temperature curing is realized, in a case where the curing accelerator is used as it is without any special devising, a reaction proceeds during storage, so that the storage stability deteriorates.

Examples of the curing accelerator (D) include phosphorus atom-containing compounds such as organic phosphines, tetrasubstituted phosphonium compounds, phosphobetaine compounds, adducts of a phosphine compound and a quinone compound, or adducts of a phosphonium compound and a silane compound; amidine-based compounds such as 1,8-diazabicyclo(5,4,0)undecene-7 and imidazole; nitrogen atom-containing compounds such as tertiary amines such as dimethyl urea and benzyl dimethyl amine, amidinium salts, and ammonium salts. Among these, the curing accelerator (D) preferably contains amidine-based compounds, and more preferably contains imidazole compounds. Examples of the imidazole compounds include 2-methylimidazole, 2-phenylimidazole, imidazole-2-carboaldehyde, 5-azabenzoimidazole, 4-azabenzoimidazole and the like, but the imidazole compounds are not limited thereto. Among these, 2-methylimidazole is preferably used.

A content of the curing accelerator (D) in the encapsulating resin composition is not particularly limited, but is, for example, preferably equal to or more than 0.1% by mass and equal to or less than 5% by mass, and more preferably equal to or more than 0.2% by mass and equal to or less than 4% by mass, with respect to an entirety of the encapsulating resin composition.

By setting the content of the curing accelerator (D) to equal to or more than the above lower limit value, the encapsulating resin composition is easily appropriately cured. On the other hand, a molten state is lengthened by setting the content of the curing accelerator (D) to equal to or less than the above upper limit value, and a low viscosity state can be lengthened. As a result, low-temperature encapsulating can be facilitated.

### [Thermosetting Resin (A)]

The thermosetting resin (A) includes an epoxy resin.

As the epoxy resin, a monomer, oligomer, or polymer having two or more epoxy groups in one molecule can be used in general, and a molecular weight and a molecular structure thereof are not particularly limited.

Specific examples of the epoxy resin include bisphenol type epoxy resins such as a biphenyl type epoxy resin, a bisphenol A-type epoxy resin, a bisphenol F type epoxy resin, and a tetramethyl bisphenol F type epoxy resin; crystalline epoxy resins such as a stillben type epoxy resin, and a hydroquinone type epoxy resin; novolac type epoxy resins such as a cresol novolac type epoxy resin, a phenol novolac type epoxy resin, and a naphthol novolac type epoxy resin; aralkyl type epoxy resins such as a phenylene skeleton-containing phenol aralkyl type epoxy resin, a biphenylene skeleton-containing phenol aralkyl type epoxy resin, a phenylene skeleton-containing naphthol aralkyl type epoxy resin, and an alkoxynaphthalene skeleton-containing phenol aralkyl epoxy resin; trifunctional epoxy resins such as a triphenol methane type epoxy resin, and an alkyl-modified triphenol methane type epoxy resin; tetrafunctional epoxy resins such as a tetrakisphenol ethane type epoxy resin; modified phenol type epoxy resins such as a dicyclopentadiene-modified phenol type epoxy resin, and a terpene-modified phenol type epoxy resin; and heterocyclecontaining epoxy resins such as a triazine nucleus-containing epoxy resin. One kind of the exemplified epoxy resin may be used alone, or two or more kinds thereof may be used in combination. Among these, from the viewpoint of achieving both the storage stability and the low-temperature curability and improving moldability, it is more preferable to use at least one of the novolac type epoxy resin, the trifunctional epoxy resin, and the tetrafunctional epoxy resin.

In addition, among the epoxy resins, it is preferable to contain an epoxy resin having an epoxy equivalent of equal to or more than 160 g/eq and equal to or less than 250 g/eq, and more preferably to contain an epoxy resin having an epoxy equivalent of equal to or more than 180 g/eq and equal to or less than 220 g/eq. Thereby, the balance between the storage stability and the low-temperature curability is easily improved.

The ICI viscosity of the thermosetting resin (A) at 150°C is appropriately suitably set based on the content of the inorganic filler (B), but for example, the upper limit value is preferably equal to or less than 60 poises, more preferably equal to or less than 50 poises, and even more preferably equal to or less than 40 poises. Thereby, the fluidity of the encapsulating resin composition is improved, and the low-temperature encapsulating is facilitated.

On the other hand, the lower limit value of the ICI viscosity of the thermosetting resin (A) at 150°C is not particularly limited, but may be, for example, equal to or more than 0.01 poises.

One poise is 0.1 Pa·s.

The content of the thermosetting resin (A) is not particularly limited, but is, for example, preferably equal to or more than 1% by mass and equal to or less than 50% by mass, more preferably equal to or more than 2% by mass and equal to or less than 30% by mass, and even more preferably equal to or more than 5% by mass and equal to or less than 20% by mass, with respect to an entirety of the encapsulating resin composition.

By setting the content of the thermosetting resin (A) to equal to or more than the above lower limit value, the fluidity and the moldability of the encapsulating resin composition can be improved more effectively. In addition, by setting the content of the thermosetting resin (A) to equal to or less than the above upper limit value, the storage stability and the low-temperature curability can be improved more effectively.

### [Inorganic Filler (B)]

Examples of the inorganic filler (B) include silica, alumina, kaolin, talc, clay, mica, rock wool, wollastonite, glass powder, glass flakes, glass beads, glass fibers, silicon carbide, silicon nitride, aluminum nitride, carbon black, graphite, titanium dioxide, calcium carbonate, calcium sulfate, barium carbonate, magnesium carbonate, magnesium sulfate, barium sulfate, cellulose, aramid, wood, and the like. One kind of the exemplified inorganic filler may be used alone, or two or more kinds thereof may be used in combination.

Examples of the above silica include crystalline silica (crushed crystalline silica), fused silica (crushed amorphous silica, or spherical amorphous silica), and liquid encapsulating silica (spherical amorphous silica for liquid encapsulating). Among these, fused spherical silica is preferable from the viewpoint of facilitating low-temperature encapsulating while maintaining storage stability.

The average particle diameter of the inorganic filler (B) is not particularly limited, but is typically 0.1 µm to 100 µm, and preferably 0.2 µm to 50 µm. It is considered that by setting the average particle diameter to be appropriate, the effect that a shell containing a molten mixture is more uniformly coated can be obtained in a granulating step described later. In addition, in a case where finally obtained core-shell particles are used as an encapsulating material for a connector, filling properties in a mold cavity can be improved.

The volume-based particle diameter distribution of the inorganic filler (B) can be measured with a commercially available laser particle diameter distribution meter (for example, SALD-7000 manufactured by SHIMADZU CORPORATION).

The content of the inorganic filler (B) is equal to or more than 50% by mass and equal to or less than 95% by mass, preferably equal to or more than 60% by mass and equal to or less than 95% by mass, and more preferably equal to or more than 65% by mass and equal to or less than 85% by mass, with respect to an entirety of the encapsulating resin composition.

By setting the content of the inorganic filler (B) to equal to or more than the above lower limit value, the storage stability and low-temperature curability in a case of being encapsulated by the encapsulating resin composition can be effectively improved. In addition, by setting the content of the inorganic filler (B) to equal to or less than the above upper limit value, the fluidity of the encapsulating resin composition can be improved, and the moldability can be improved more effectively.

In addition to the above description, the encapsulating resin composition of the present embodiment may contain the following components.

### [Curing Agent (C)]

The encapsulating resin composition can contain a curing agent (C). The curing agent (C) is not particularly limited as long as the curing agent is cured by reacting with the thermosetting resin (A), but examples thereof include linear aliphatic diamine having 2 to 20 carbon atoms such as ethylenediamine, trimethylenediamine, tetramethylenediamine, and hexamethylenediamine, as well as amines such as metaphenylenediamine, paraphenylenediamine, paraxylene diamine, 4,4'-diaminodiphenylmethane, 4,4'-diaminodiphenylpropane, 4,4'-diaminodiphenyl ether, 4,4'-diaminodiphenylsulfone, 4,4'-diaminodicyclohexane, bis(4-aminophenyl)phenylmethane, 1,5-diaminonaphthalene, metaxylene diamine, paraxylene diamine, 1,1-bis(4-aminophenyl)cyclohexane, and dicyanodiamid; resol type phenolic resins such as an aniline-modified resol resin, and a dimethyl ether resol resin; novolac type phenolic resins such as a phenol novolac resin, a cresol novolac resin, a tertbutylphenol novolac resin, and a nonylphenol novolac resin; phenol aralkyl resins such as a phenylene skeleton-containing phenol aralkyl resin, and a biphenylene skeleton-containing phenol aralkyl resin; phenolic resins having a condensed polycyclic structure such as a naphthalene skeleton and an anthracene skeleton; polyoxystyrene such as polyparaoxystyrene; acid anhydrides containing alicyclic acid anhydrides such as a hexahydrophthalic anhydride (HHPA) and a methyltetrahydrophthalic anhydride (MTHPA), and aromatic acid anhydrides such as a trimellitic anhydride (TMA), a pyromellitic anhydride (PMDA), and a benzophenone tetracarboxylic acid (BTDA); and polymercaptan compounds such as polysulfide, thioester, and thioether; isocyanate compounds such as isocyanate prepolymer and blocked isocyanate; organic acids such as a carboxylic acid-containing polyester resin. One kind of the exemplified curing agent may be used alone, or two or more kinds thereof may be used in combination. Among these, from the viewpoint of realizing the low-temperature encapsulating of the encapsulating resin composition, it is more preferable to use at least one of the novolac type phenolic resin and the phenol aralkyl resin.

The content of the curing agent (C) in the encapsulating resin composition is not particularly limited, but is, for example, preferably equal to or more than 1% by mass and equal to or less than 12% by mass, and more preferably equal to or more than 3% by mass and equal to or less than 10% by mass, with respect to an entirety of the encapsulating resin composition.

By setting the content of the curing agent (C) to equal to or more than the above lower limit value, the encapsulating resin composition is easily appropriately cured. On the other hand, by setting the content of the curing agent (C) to equal to or less than the above upper limit value, the fluidity is moderately maintained, and the low-temperature encapsulating is facilitated.

### [Coupling Agent (E)]

The encapsulating resin composition can contain, for example, a coupling agent (E). As the coupling agent (E), for example, known coupling agents such as various silane compounds such as epoxysilane, mercaptosilane, aminosilane, alkylsilane, ureidosilane, and vinylsilane, titanium compounds, aluminum chelates, and aluminum-zirconium compounds can be used.

More specifically, examples of the coupling agent include silane coupling agents such as vinyltrichlorosilane, vinyltrimethoxysilane, vinyltriethoxysilane, vinyltris(β-methoxyethoxy)silane, γ-methacryloxypropyltrimethoxysilane, β-(3,4-epoxycyclohexyl)ethyltrimethoxysilane, γ-glycydoxypropyltrimethoxysilane, γ-glycidoxypropyltriethoxysilane, γ-glycidoxypropylmethyldimethoxysilane, γ-methacryloxypropylmethyldiethoxysilane, γ-methacryloxypropyltriethoxysilane, vinyltriacetoxysilane, γ-mercaptopropyltrimethoxysilane, γ-aminopropyltriethoxysilane, γ-anilinopropyltrimethoxysilane, γ-anilinopropylmethyldimethoxysilane, γ-[bis(β-hydroxyethyl)]aminopropyltriethoxysilane, N-β-(aminoethyl)-γ-aminopropyltrimethoxysilane, N-β-(aminoethyl)-γ-aminopropyltriethoxysilane, N-β-(aminoethyl)-γ-aminopropylmethyldimethoxysilane, N-phenyl-γ-aminopropyltrimethoxysilane, γ-(β-aminoethyl)aminopropyldimethoxymethylsilane, N-(trimethoxysilylpropyl)ethylenediamine, N-(dimethoxymethylsilylisopropyl)ethylenediamine, methyltrimethoxysilane, dimethyldimethoxysilane, methyltriethoxysilane, N-β-(N-vinylbenzylaminoethyl)-γ-aminopropyltrimethoxysilane, γ-chloropropyltrimethoxysilane, hexamethyldisilane, vinyltrimethoxysilane, γ-mercaptopropylmethyldimethoxysilane, 3-isocyanatepropyltriethoxysilane, 3-acryloxypropyltrimethoxysilane, hydrolysate of 3-triethoxysilyl-N-(1,3-dimethyl-butylidene)propylamine; and titanate coupling agents such as isopropyltriisostearoyl titanate, isopropyltris(dioctylpyrophosphate)titanate, isopropyltri(N-aminoethyl-aminoethyl)titanate, tetraoctylbis(ditridecylphosphite)titanate, tetra(2,2-diallyloxymethyl-1-butyl)bis(ditridecyl)phosphitetitanate, bis(dioctylpyrophosphate)oxyacetatetitanate, bis(dioctylpyrophosphate)ethylen titanate, isopropyltrioctanoyltitanate, isopropyldimethacrylisostearoyltitanate, isopropyltridodecylbenzenesulfonyltitanate, isopropylisostearoyldiacrylictitanate, isopropyltri(dioctylphosphate)titanate, isopropyltricylphenyltitanate, tetraisopropylbis(dioctylphosphite)titanate. One kind of the exemplified coupling agent may be used alone, and two or more kinds thereof may be used in combination.

The content of the coupling agent (E) in the encapsulating resin composition is not particularly limited, but is, for example, preferably equal to or more than 0.05% by mass and equal to or less than 3% by mass, and more preferably equal to or more than 0.1% by mass and equal to or less than 2% by mass, with respect to an entirety of the encapsulating resin composition. By setting the content of the coupling agent (E) to equal to or more than the above lower limit value, the dispersibility of the inorganic filler (B) in the encapsulating resin composition can be improved. In addition, by setting the content of the coupling agent (E) to equal to or less than the above upper limit value, the fluidity of the encapsulating resin composition can be improved, and the moldability can be improved.

Furthermore, the encapsulating resin composition of the present embodiment can contain various additives such as a coloring agent such as carbon black; a release agent such as natural wax, synthetic wax, higher fatty acid or metal salt thereof, paraffin, polyethylene oxide, and the like; an ion trapping agent such as hydrotalcite; a low stress agent such as silicone oil and silicone rubber; a flame retardant agent such as aluminum hydroxide; an antioxidant, and the like, in addition to the above components.

### <Producing Method of Sealing Resin Composition>

The encapsulating resin composition of the present embodiment is obtained by a known method. For example, a method of kneading the above-described components and granulating the components may be used, or a producing method of a particulate encapsulating resin composition described below may be used.

Hereinafter, the producing method of a particulate encapsulating resin composition will be described.

The producing method of a particulate encapsulating resin composition of the present embodiment includes the following steps:
· a melt-mixing step of obtaining a molten mixture (X) containing a base resin (thermosetting resin (A));
· a charging step of charging the molten mixture (X) and another material (Y) such as the inorganic filler (B) into a stirrer provided with stirring blades;
· a granulating step of obtaining core-shell particles each of which has a shell containing the molten mixture (X) on the outside of a core containing the material (Y) containing the inorganic filler (B) or the like by heating and mixing in the stirrer; and
· a step of mixing the core-shell particles and the curing accelerator (D) to obtain an encapsulating resin composition.

Each of the steps, materials used in each step, steps that may be optionally included, and the like will be described.

### (Melt-mixing Step)

In the melt-mixing step, the thermosetting resin (A) is melted by an appropriate method. In addition to the thermosetting resin (A), it is preferable that the curing agent (C) is melted together with the thermosetting resin to obtain the molten mixture (X).

The melt-mixing method is not particularly limited, but for example, the thermosetting resin (A) and the curing agent (C) are heated and mixed at 120°C to 180°C, and then the resultant mixture is cooled and pulverized to be a pulverized product, and the molten mixture (X) which is the (granular or particulate) pulverized product can be obtained.

In addition, for example, a coupling agent, a release agent, and a low stress agent may be additionally used.

### (Charging Step)

In the charging step, at least the above-described molten mixture (X), for example, the inorganic filler (B), and the other material (Y) are charged into a stirrer provided with stirring blades. Examples of the other material include a coloring agent, an ion trapping agent, a flame retardant agent, an antioxidant, and the like.

The stirrer provided with the stirring blades (hereinafter, also simply referred to as the "stirrer") includes the stirring blades capable of stirring the molten mixture (X), the inorganic filler (B), and the material (Y), and during the driving of the stirring blades, a linear velocity at tips of the blades is preferably equal to or more than 0.1 m/s.

### (Granulating Step)

In the granulating step after performing the charging step, the components charged into the stirrer in the charging step are heated and mixed by driving the stirring blades. The heating temperature is preferably 110°C to 180°C, and more preferably 120°C to 170°C. By setting the temperature to equal to or higher than the lower limit value, the molten mixture (X) is moderately softened, and it is easier to coat the shell uniformly. On the other hand, by setting the temperature to equal to or lower than the upper limit value, deterioration of a raw material and the like can be suppressed, and the performance of the finally obtained particulate encapsulating resin composition can be further improved.

In the granulating step, a time for maintaining the components charged into the stirrer at equal to or higher than 110°C (time for maintaining the components at equal to or higher than 110°C) is preferably 5 to 200 minutes, more preferably 10 to 180 minutes, and even more preferably 20 to 150 minutes. By setting this time to equal to or higher than 10 minutes, there are effects such as easy formation of a shell having a sufficient thickness and more uniform thickness of the shell. In addition, by setting this time to equal to or lower than 200 minutes, deterioration of the material and the like can be suppressed. Therefore, in a case where the core-shell particles are applied to an encapsulating epoxy resin composition, various performances can be further improved.

A part or all of the granulating step is preferably carried out under a depressurization. Specifically, a part or all of the granulating step is carried out preferably under a depressurization of equal to or less than 30 kPa, more preferably under a depressurization of 0.01 to 20 kPa, even more preferably under a depressurization of 0.05 to 15 kPa, and particularly preferably under a depressurization of 0.1 to 10 kPa.

Regarding the depressurization, for example, the granulating step can be performed under the depressurization by using a stirrer 1 capable of reducing the pressure during stirring.

The depressurization is preferably performed for a time at least equal to or more than half of the total time of the granulating step.

### (Mixing of Sealing Resin Composition)

The core-shell particles obtained after carrying out the granulating step and the curing accelerator (D) are mixed to each other to obtain an encapsulating resin composition. Thereby, the encapsulating resin composition can be obtained without adding heat to the curing accelerator (D). After the granulating step, the following steps may be further included.

In addition, in the present embodiment, the producing method of an encapsulating resin composition is not limited to this case, and may be modified as long as the curing accelerator (D) is not heated. For example, the encapsulating resin composition may be obtained by mixing the pulverized core-shell particles with the curing accelerator after the following steps.

### (Cooling and Stirring Step)

A producing method of particles in the present embodiment preferably includes a cooling and stirring step of cooling the components in the stirrer while stirring, after the granulating step. As a result, the core-shell particles obtained in the above-described granulating step are further suppressed from agglomerating (becoming massive form) during cooling, which is preferable.

The core-shell particles are preferably cooled to a temperature equal to or lower than the softening point of the molten mixture (X) by the cooling and stirring step. Typically, the core-shell particles are preferably cooled to equal to or lower than 60°C, more preferably cooled to equal to or lower than 55°C, even more preferably cooled to equal to or lower than 50°C, and particularly preferably cooled to room temperature, through the cooling and stirring step.

In the cooling and stirring step, as in the granulating step, the depressurization may be performed in a part or all of the cooling and stirring step. A pressure in a case of performing the depressurization is, for example, equal to or less than 20 kPa, preferably 0.01 to 20 kPa, and more preferably 0.05 to 15 kPa. It is considered that the reduction of moisture and the reattachment of moisture can be suppressed by performing the depressurization even during cooling, so that the agglomerate of particles and the like can be further reduced.

### (Pulverizing Step)

In a case where the particles granulated in the present embodiment are agglomerated (two or more core-shell particles are attached to each other) and the like, a pulverizing step for pulverizing agglomerates thereof may be performed. In this case, the agglomerates may be mixed and pulverized together with the curing accelerator (D).

A specific pulverization method is not particularly limited, but for example, an impact type such as a hammer mill can be used. The raw material supply rate can be set to a condition of 1 to 1000 kg/h.

In addition, in a case of performing the pulverization, a ball mill such as a vibrating ball mill, a continuous rotary ball mill, and a batch type ball mill; a pot mill such as a wet pot mill and a planetary pot mill; a roller mill; or the like may be used.

Although the embodiments of the present invention are described above, these embodiments are examples of the present invention, and various configurations other than the above description can be adopted. In addition, the present invention is not limited to the above-described embodiment, and modifications, improvements, and the like within the scope of achieving the object of the present invention are included in the present invention.

### [Examples]

An aspect of the present invention will be described in detail based on Examples and Comparative Examples. The present invention is not limited to examples.

The following materials were used as raw materials for the encapsulating resin composition.
Thermosetting resin (A): Orthocresol novolac type epoxy resin (CNE-195LL manufactured by Changchun Artificial Resin Co., Ltd., epoxy equivalent of 198 g/eq)
Thermosetting resin (A): Triphenol methane type epoxy resin (1032H-60 manufactured by Mitsubishi Chemical Corporation, epoxy equivalent of 171 g/eq)
Thermosetting resin (A): Tetrakisphenol ethane type epoxy resin (JER1031S manufactured by Mitsubishi Chemical Corporation, epoxy equivalent of 200 g/eq)
Inorganic filler (B): Filler 1 (FB-950 manufactured by Denka Company Limited, median diameter of D50: 23 µm)
Inorganic filler (B): Filler 2 (SO-25R manufactured by Admatechs Company Limited, median diameter of D50: 0.5 µm)
Curing agent (C): Phenol novolac resin (PR-HF-3 manufactured by Sumitomo Bakelite Co., Ltd., hydroxyl group equivalent of 105 g/eq)
Curing agent (C): Phenolic resin containing a triphenylmethane skeleton (HE910-20 manufactured by AIR WATER INC, hydroxyl group equivalent of 101 g/eq)
Curing accelerator (D): 2-Phenylimidazole (2PZ-PW manufactured by SHIKOKU CHEMICALS CORPORATION)
Curing accelerator (D): Triphenylphosphine (PP-360 manufactured by K·I Chemical Industry Co., LTD)
Curing accelerator (D): 1,3-Dimethylurea (1,3-dimethylurea manufactured by Tokyo Chemical Industry Co., Ltd.)
Coupling agent (E): Phenylaminopropyltrimethoxysilane (CF-4083 manufactured by Dow Toray Co., Ltd.)
Coupling agent (E): γ-mercaptopropyltrimethoxysilane (KBM-803 manufactured by Shin-Etsu Chemical Co., Ltd.)
Coloring agent: Carbon black (#5 manufactured by Mitsubishi Chemical Corporation)
Ion trapping agent: Hydrotalcite (DHT-4H manufactured by Kyowa Chemical Industry Co., LTD)
Release agent: Carnauba wax (TOWAX-132 manufactured by TOAGOSEI CO., LTD.)
Low stress agent: Silicone oil (FZ-3730 manufactured by Dow Toray Co., Ltd.)

### <Examples 1 and 2>

Regarding each example, an encapsulating resin composition was produced by the following procedure based on the components and formulations shown in Table 1.

### 1. Melt-mixing Step

Among the raw materials shown in Table 1, the thermosetting resin (A), a part of the curing agent (C), and the release agent were charged into a heating pot and were heated with a heat medium oil at 150°C. Stirring with stirring blades was started when a material temperature was higher than 100°C, and the coupling agent (E) was added when the material temperature was higher than 120°C, and then a resultant mixture was stirred for five minutes.

After the stirring, the mixture was transferred to another container and cooled at 10°C. The material was cooled to equal to or lower than 20°C, and then pulverized with a hammer mill.

In this way, a pulverized product of the molten mixture having an average particle diameter of 700 µm was obtained.

### 2. Charging step

The pulverized product of the molten mixture obtained in the above "1.", the inorganic filler (B), the coloring agent, and the low stress agent were charged into a tank body of a stirrer.

As the stirrer, a stirrer having a clearance (distance between the tip of the stirring blade and the tank body) of 3.0 mm was used. This stirrer was provided with a motor and a speed regulator for stirring, a lid for stirring in a closed state, a pump for depressurization, a heater for temperature control, an observation window, and the like.

### 3. Granulating Step

The components charged into the tank body in the above "2." were heated by the heater provided in the stirrer while mixing the components by rotating the stirring blades so that a linear velocity at the tip was 1.0 m/s. The temperature of the contents in the tank body was maintained at 120°C, and the stirring blades were continuously rotated under normal pressure for 30 minutes. The temperature of the contents in the tank body was confirmed with a radiation thermometer from the observation window provided in the stirrer.

As a result, core-shell particles having shells containing the molten mixture were granulated on the outside of cores containing the inorganic filler (B) and the coloring agent.

### 4. Cooling and Stirring Step

After the above step "3.", the heating provided from the heater was weakened, the stirring blades were rotated so that the linear velocity at the tip was 1.0 m/s, and the core-shell particles were cooled for 120 minutes until the temperature of the core-shell particles was equal to or lower than 45°C.

### 5. Pulverizing Step

In a case where the partial agglomerate of the core-shell particles is confirmed, the core-shell particles cooled in the above "4" were charged into a hammer mill and were processed.

86.6 parts by mass of the obtained core-shell particles, 12.2 parts by mass of the pulverized product of the molten mixture obtained in the above-described melt-mixing step, and particles containing 1.0 part by mass of the curing agent (C) and 0.2 parts by mass of the curing accelerator (D), which were separately produced, were prepared. These were mixed and finely pulverized with the hammer mill to obtain a powder-like encapsulating resin composition having the compositions shown in Table 1.

### <Example 3>

Using the above raw materials, each component was mixed at 15°C to 28°C using a mixer so as to have Composition (% by mass) shown in Table 1. Next, the obtained mixture was roll-kneaded at 70°C to 100°C, and then was cooled and pulverized to obtain an encapsulating resin composition.

### <Comparative Examples 1 to 4>

Using the above raw materials, each component was mixed at 15°C to 28°C using a mixer so as to have Composition (% by mass) shown in Table 1. Next, the obtained mixture was roll-kneaded at 70°C to 100°C, and then was cooled and pulverized to obtain each encapsulating resin composition.

### <Measurement and Evaluation>

The following evaluations and measurements were carried out for each of the obtained encapsulating resin compositions.

· DSC measurement: Using a differential scanning calorimeter (DSC7020 manufactured by SII), the encapsulating resin composition of 10 mg was measured under a nitrogen stream at a temperature increase rate of 10°C/min in a temperature range of 30°C to 200°C. A difference between a heat release amount height H1 at 70°C and a heat release amount height HMAX at a maximum heat release peak temperature was denoted by ΔH1, and a temperature when a heat release amount height in a case where the heat release amount height H1 was defined as a reference reached 10% of ΔH1 was denoted by a heat release onset temperature. The maximum heat release peak temperature was determined from the obtained DSC curve. The results are shown in Table 1. In addition, the DSC charts of the respective encapsulating resin compositions in Examples 1 and 2, and Comparative Examples 1 to 4 are shown in Fig. 2.
· Low-temperature moldability: A connector whose housing portion was formed of polyphenylene sulfide (PPS) resin was solder-mounted on a circuit board using a copper-clad laminated sheet containing glass fiber, and each encapsulating resin composition obtained above is used to perform collective encapsulating and molding, and as a result, a molded product is obtained. Examples 1 and 2, and Comparative Examples 1 and 2 were molded at 140°C for two minutes, and Comparative Examples 3 and 4 were molded at 175°C for two minutes. In addition, since in Comparative Examples 3 and 4, curing was not performed properly under the condition of 140°C for two minutes, molding was performed by changing an effect condition.

A level at which an interface between the connector and the encapsulating body was not peeled off after molding was denoted by O, and a level at which the interface between the connector and the encapsulating body was peeled off was denoted by X.
· Storage stability: The encapsulating resin compositions were stored at 5°C for six months, and then spiral flows were measured. In a case where the measured spiral flows were equal to or more than 90% of an initial value (spiral flow of the encapsulating resin composition before storage), the spiral flows were evaluated as O, and in a case where the measured spiral flows were less than 90%, the spiral flows was evaluated as X.

**[Table 1]**

| | | Example 1 | Example 2 | Example 3 | Comparative Example 1 | Comparative Example 2 | Comparative Example 3 | Comparative Example 4 |
|---|---|---|---|---|---|---|---|---|
| | Production line | No kneading | No kneading | Kneaded | Kneaded | Kneaded | Kneaded | Kneaded |
| Thermosetting resin (A) | Orthocresol novolac type epoxy resin | 11.93 | | | 11.93 | | 12.27 | |
| | Triphenol methane type epoxy resin | | 11.52 | | | 11.52 | | 11.81 |
| | Tetrakisphenol ethane type epoxy resin | | | 11.97 | | | | |
| Inorganic filler (B) | Filler 1 | 65 | 65 | 65 | 65 | 65 | 65 | 65 |
| | Filler 2 | 15 | 15 | 15 | 15 | 15 | 15 | 15 |
| Curing agent (C) | Phenol novolac resin | 5.97 | | 5.98 | 5.97 | | 6.13 | |
| | Phenolic resin containing a triphenylmethane skeleton | | 6.48 | | | 6.48 | | 6.64 |
| Curing accelerator (D) | 2-Phenylimidazole | 0.8 | 0.7 | | 0.8 | 0.7 | | |
| | Triphenylphosphine | | | | | | 0.3 | 0.25 |
| | 1,3-Dimethylurea | | | 0.75 | | | | |
| Coupling agent (E) | Phenylaminopropyltrimethoxysilane | 0.1 | 0.1 | 0.1 | 0.1 | 0.1 | 0.1 | 0.1 |
| | γ-mercaptopropyltrimethoxysilane | 0.1 | 0.1 | 0.1 | 0.1 | 0.1 | 0.1 | 0.1 |
| Coloring agent | Carbon black | 0.3 | 0.3 | 0.3 | 0.3 | 0.3 | 0.3 | 0.3 |
| Ion trapping agent | Hydrotalcite | 0.2 | 0.2 | 0.2 | 0.2 | 0.2 | 0.2 | 0.2 |
| Release agent | Carnauba wax | 0.3 | 0.3 | 0.3 | 0.3 | 0.3 | 0.3 | 0.3 |
| Low stress agent | Silicone oil | 0.3 | 0.3 | 0.3 | 0.3 | 0.3 | 0.3 | 0.3 |
| | | 100 | 100 | 100 | 100 | 100 | 100 | 100 |
| DSC | Maximum heat release peak temperature (°C) | 127 | 126 | 157 | 123 | 120 | 158 | 151 |
| | half-value width (°C) | 18 | 17 | 18 | 27 | 27 | 28 | 30 |
| | Heat release onset temperature (°C) | 103 | 102 | 126 | 85 | 84 | 119 | 111 |
| Evaluation | Low-temperature moldability | ○ | ○ | ○ | ○ | ○ | × | × |
| | Storage stability | ○ | ○ | ○ | × | × | ○ | ○ |
| | Connector moldability | ○ | ○ | ○ | ○ | ○ | × | × |

### REFERENCE SIGNS LIST

- 10:: circuit board
- 20:: connector
- 21:: terminal
- 22:: housing
- 100:: electronic component

## Claims

1. An encapsulating resin composition that is used for collectively encapsulating a circuit board and at least a part of a connector portion that electrically connects the circuit board with an external device,
wherein the encapsulating resin composition contains a curing accelerator, a thermosetting resin (A), and an inorganic filler, wherein the thermosetting resin (A) contains an epoxy resin, and wherein the content of the inorganic filler is equal to or more than 50% by mass and equal to or less than 95% by mass with respect to an entirety of the encapsulating resin composition,
the connector portion includes a terminal that electrically connects the circuit board with the external device, and a housing that is disposed on an outer periphery of the terminal and is encapsulated by the encapsulating resin composition,
the housing contains a thermoplastic resin, and
in a differential scanning calorimetry (DSC) curve of the encapsulating resin composition obtained in a case where a temperature is increased from 30°C to 200°C under conditions of a temperature increase rate of 10°C/min using a DSC meter, a maximum heat release peak temperature is equal to or higher than 100°C and equal to or lower than 163°C, and a half-value width of a maximum heat release peak is equal to or higher than 5°C and equal to or lower than 25°C.

2. The encapsulating resin composition according to claim 1, wherein a heat release onset temperature in the DSC curve is in a range of equal to or higher than 70°C and equal to or lower than 130°C.

3. The encapsulating resin composition according to claim 1 or 2, further comprising a curing agent (C).

4. The encapsulating resin composition according to any one of claims 1 to 3, wherein the curing accelerator contains an imidazole-based curing accelerator.

5. The encapsulating resin composition according to any one of claims 1 to 4, wherein a content of the curing accelerator is equal to or more than 0.1% by mass and equal to or less than 5% by mass, with respect to an entirety of the encapsulating resin composition.

6. An electronic component in which a circuit board and a connector portion that electrically connects the circuit board with an external device are collectively encapsulated by the encapsulating resin composition according to any one of claims 1 to 5, the electronic component comprising:
the connector portion includes a terminal that electrically connects the circuit board with the external device, and a housing that is disposed on an outer periphery of the terminal and is encapsulated by the encapsulating resin composition, and
the housing contains a thermoplastic resin.

## Patentansprüche

1. Einkapselungsharzzusammensetzung, die zum gemeinsamen Einkapseln einer Leiterplatte und zumindest eines Teils eines Verbinderabschnitts verwendet wird, der die Leiterplatte elektrisch mit einem externen Gerät verbindet,
wobei die Einkapselungsharzzusammensetzung einen Härtungsbeschleuniger, ein wärmehärtbares Harz (A) und einen anorganischen Füllstoff enthält, wobei das wärmehärtbare Harz (A) ein Epoxidharz enthält, und wobei der Gehalt des anorganischen Füllstoffs gleich oder mehr als 50 Massen-% und gleich oder weniger als 95 Massen-% in Bezug auf die Gesamtheit der Einkapselungsharzzusammensetzung beträgt,
der Verbinderabschnitt einen Anschluss, der die Leiterplatte elektrisch mit dem externen Gerät verbindet, und ein Gehäuse, das an einem Außenumfang des Anschlusses angeordnet ist und durch die Einkapselungsharzzusammensetzung eingekapselt ist, einschließt,
das Gehäuse ein thermoplastisches Harz enthält, und
in einer Differentialscanningkalorimetrie-Kurve (DSC-Kurve) der Einkapselungsharzzusammensetzung, die in einem Fall erhalten wird, worin eine Temperatur unter Bedingungen einer Temperaturanstiegsrate von 10 °C/min unter Verwendung eines DSC-Messgeräts von 30 °C auf 200 °C erhöht wird, eine maximale Wärmefreisetzungsspitzentemperatur gleich oder höher als 100 °C und gleich oder niedriger als 163 °C ist, und eine Halbwertsbreite einer maximalen Wärmefreisetzungsspitze gleich oder höher als 5 °C und gleich oder niedriger als 25 °C ist.

2. Einkapselungsharzzusammensetzung gemäß Anspruch 1, wobei die Wärmefreisetzungsbeginntemperatur in der DSC-Kurve in einem Bereich von gleich oder höher als 70 °C und gleich oder niedriger als 130 °C liegt.

3. Einkapselungsharzzusammensetzung gemäß Anspruch 1 oder 2, weiter umfassend ein Härtungsmittel (C).

4. Einkapselungsharzzusammensetzung gemäß einem der Ansprüche 1 bis 3, wobei der Härtungsbeschleuniger einen Härtungsbeschleuniger auf Imidazolbasis enthält.

5. Einkapselungsharzzusammensetzung gemäß einem der Ansprüche 1 bis 4, wobei ein Gehalt des Härtungsbeschleunigers gleich oder größer als 0,1 Massen-% und gleich oder kleiner als 5 Massen-%, bezogen auf die Gesamtheit der Einkapselungsharzzusammensetzung, ist.

6. Elektronische Komponente, bei der eine Leiterplatte und ein Anschlussteil, das die Leiterplatte elektrisch mit einem externen Gerät verbindet, gemeinsam durch die Einkapselungsharzzusammensetzung gemäß einem der Ansprüche 1 bis 5 verkapselt sind, wobei die elektronische Komponente umfasst:
der Verbinderabschnitt einen Anschluss, der die Leiterplatte elektrisch mit dem externen Gerät verbindet, und ein Gehäuse, das an einem Außenumfang des Anschlusses angeordnet ist und durch die Einkapselungsharzzusammensetzung eingekapselt ist, einschließt, und
das Gehäuse ein thermoplastisches Harz enthält.

## Revendications

1. Composition de résine d'encapsulation, qui est utilisée pour l'encapsulation collective d'un circuit imprimé et d'au moins une partie d'un élément connecteur qui connecte électriquement le circuit imprimé à un dispositif externe,
dans laquelle la composition de résine d'encapsulation contient un accélérateur de durcissement, une résine thermodurcissable (A), et une charge inorganique, où la résine thermodurcissable (A) contient une résine époxy, et où la teneur en charge inorganique est égale ou supérieure à 50 % en masse et égale ou inférieure à 95 % en masse par rapport à l'entièreté de la composition de résine d'encapsulation, l'élément connecteur comprend une terminaison qui connecte électriquement le circuit imprimé au dispositif externe, et un logement qui est placé sur une périphérie extérieure de la terminaison et qui est encapsulé par la composition de résine d'encapsulation,
le logement contient une résine thermoplastique, et
dans une courbe de calorimétrie différentielle à balayage (DSC) de la composition de résine d'encapsulation, obtenue par augmentation de la température de 30 °C à 200 °C à une vitesse d'augmentation de la température de 10 °C/minute à l'aide d'un calorimètre, la température du taux maximal de dégagement de chaleur est égale ou supérieure à 100 °C et égale ou inférieure à 163 °C, et la largeur à mi-hauteur du taux maximal de dégagement de chaleur est égale ou supérieure à 5 °C et égale ou inférieure à 25 °C.

2. Composition de résine d'encapsulation selon la revendication 1, dans laquelle la température de début de dégagement de chaleur dans la courbe DSC se situe dans la plage allant d'égale ou supérieure à 70 °C à égale ou inférieure à 130 °C.

3. Composition de résine d'encapsulation selon la revendication 1 ou 2, comprenant en outre, un agent de durcissement (C).

4. Composition de résine d'encapsulation selon l'une quelconque des revendications 1 à 3, dans laquelle l'accélérateur de durcissement contient un accélérateur de durcissement à base d'imidazole.

5. Composition de résine d'encapsulation selon l'une quelconque des revendications 1 à 4, dans laquelle la teneur en accélérateur de durcissement est égale ou supérieure à 0,1 % en masse et égale ou inférieure à 5 % en masse, par rapport à l'entièreté de la composition de résine d'encapsulation.

6. Composant électrique, dans lequel un circuit imprimé et un élément connecteur, qui connecte électriquement le circuit imprimé à un dispositif externe, sont collectivement encapsulés par la composition de résine d'encapsulation selon l'une quelconque des revendications 1 à 5, le composant électrique comprenant :
l'élément connecteur comprend une terminaison qui connecte électriquement le circuit imprimé au dispositif externe, et un logement qui est placé sur une périphérie extérieure de la terminaison et qui est encapsulé par la composition de résine d'encapsulation, et
le logement contient une résine thermoplastique.
